# EUROPÄISCHE PATENTSCHRIFT

(11) **EP 1 131 232 B1**
(45) Veröffentlichungstag und Bekanntmachung des Hinweises auf die Patenterteilung: **14.09.2005**
(21) Anmeldenummer: 00963956.8
(22) Anmeldetag: 01.09.2000
(51) Int. Cl.: B60S 1/34

(54) **ANTRIEBSWELLE FÜR EINEN SCHEIBENWISCHER**
PRIMARY SHAFT FOR A WINDSCREEN WIPER
ARBRE D'ENTRAINEMENT POUR ESSUIE-GLACE

(30) Priorität: 21.09.1999 DE 19945091
(43) Veröffentlichungstag der Anmeldung: 12.09.2001
(73) Patentinhaber: ROBERT BOSCH GMBH, 70442 Stuttgart (DE)
(72) Erfinder: MERKEL, Wilfried, 77876 Kappelrodeck (DE); DAENEN, Roger, B-3770 Vlytingen-Riemst (BE)
(86) Internationale Anmeldenummer: PCT/DE2000/002993
(87) Internationale Veröffentlichungsnummer: WO 2001/021460

(56) Entgegenhaltungen:
- EP-A- 0 771 958
- EP-A- 0 781 692
- US-A- 5 454 134
- US-A- 5 621 943

## Beschreibung

### Stand der Technik

Die Erfindung geht von einer Antriebswelle für einen Scheibenwischer nach dem Oberbegriff des Anspruchs 1 aus.

Bekannte Scheibenwischer besitzen einen Wischarm, der aus einem Befestigungsteil und einem über ein Abklappgelenk daran angelenkten Gelenkteil mit einer Wischstange aufgebaut ist. Ein hakenförmiges Ende der Wischstange greift in einen Einhängekasten eines Wischblatts, der von zwei Seitenwangen eines Mittelbügels gebildet wird, und umfaßt ein Anschlußteil mit einem Gelenkbolzen. Das so gebildete Gelenk führt das Wischblatt während der Schwenkbewegung über die Fahrzeugscheibe.

Der Wischarm ist über sein Befestigungsteil mit einer Antriebswelle fest, aber lösbar verbunden. Diese ragt aus der Fahrzeugkarosserie und hat an ihrem freien Wellenende einen Außenkonus, der mit einem Innenkonus am Befestigungsteil zusammenwirkt, indem eine Schraubenmutter die konischen Teile fest zusammendrückt. Die Antriebswelle ist in der Regel aus Stahl gefertigt und an ihrem antriebsseitigen Ende mit einer Kurbel vernietet.

Aus der DE-A-44 28 371 ist eine Wellennabenverbindung eines Scheibenwischers bekannt, bei der die Antriebswelle im Verbindungsbereich zum Befestigungsteil einen von der Kreisform abweichenden, insbesondere einen polygonalen Querschnitt und einen Absatz aufweist. Das Befestigungsteil liegt mit einem Rand einer Ausnehmung an dem Absatz oder an einer Zwischenscheibe an, wobei sich die Ausnehmung zum Ende der Antriebswelle hin konisch erweitert. In die Ausnehmung ist ein passendes, konisches Klemmteil eingesetzt, das durch eine Schraubenmutter gegen das Befestigungsteil gedrückt wird. Das Klemmteil besitzt einen Durchgang für die Antriebswelle, dessen Querschnittprofil dem der Antriebswelle entspricht.

Aus der US-A-3 085 821 ist eine Wellennabenverbindung eines Scheibenwischers bekannt. Das Befestigungsteil liegt mit einem Rand einer Ausnehmung an einem Absatz der Antriebswelle oder einer Zwischenscheibe an, wobei sich die Ausnehmung zum Ende der Antriebswelle hin konisch erweitert. In die Ausnehmung ist ein passendes, konisches Klemmteil eingesetzt, das durch eine Schraubenmutter gegen das Befestigungsteil gedrückt wird. Das Klemmteil besitzt einen Durchgang für die Antriebswelle, der zu einem zylindrischen oder konischen Bereich der Antriebswelle mit einer Rändelung bzw. gezackten Oberfläche paßt. Durch die konische Verbindung zwischen dem Befestigungsteil und dem Klemmteil und gegebenenfalls durch die konische Verbindung zwischen dem Klemmteil und der Antriebswelle wird die gezackte Oberfläche des Befestigungsteils und der Antriebswelle in die bis dahin weitgehend glatte Oberfläche des Klemmteils gedrückt und verformt diese dauerhaft. Das Klemmteil besteht zu diesem Zweck aus einem elastomeren Werkstoff oder einem relativ weichen Nichteisenmetall. Neben einem Kraftschluß wird durch viele kleine Seitenflächen der Zacken ein unterstützender Formschluß erreicht.

Aus der DE DE-U-89 13 885.6 ist bekannt, eine Spritzdüse an einem Gehäuse eines Wischerlagers anzuordnen. Ein Wasserkanal führt parallel zur Antriebswelle durch das Lagergehäuse zur Spritzdüse.

Die FR-A-2 646 801 zeigt einen Scheibenwischer mit einem Wischarm und einem Wischblatt aus Kunststoff. Der Wischarm besitzt ein Hohlprofil und ist durch ein Gasinnendruckverfahren hergestellt. Eine Ausführung zeigt ein Gelenkteil mit einer angeformten hohlen Wischstange, wobei der Hohlraum Teil einer Scheibenwaschanlage ist und Spritzlöcher aufweist, die zur Windschutzscheibe gerichtet sind. Bei einer Varianten besitzt der Wischarm kein Gelenkteil, sondern die Wischstange ist unmittelbar an dem Befestigungsteil angeformt. Hierbei wird das Waschwasser durch die Antriebswelle zugeführt.

### Vorteile der Erfindung

Nach der Erfindung ist der Grundkörper der Antriebswelle aus einem stranggepreßten Leichtmetallprofil hergestellt. An seinem freien Ende im Bereich eines Befestigungsteils trägt er ein Anschlußteil aus einem härteren Werkstoff, das ein Schraubengewinde besitzt. Als Werkstoff kommt an erster Stelle Stahl in Frage, aber auch andere Werkstoffe wie z.B. Kupfer, Bronze sind grundsätzlich geeignet.

Die erfindungsgemäße Antriebswelle ist sehr leicht und kann in vielen Varianten kostengünstig hergestellt werden. So kann das Anschlußteil zur Aufnahme eines Befestigungsteils einen Kegelsitz mit einer Riffelung oder ein polygones Mitnahmeprofil aufweisen, wobei der Werkstoff den erhöhten Anforderungen an Flächenpressung, Verschleißfestigkeit und Montierbarkeit optimal angepaßt werden kann. Dadurch ist ein zuverlässiger, leicht lösbarer Sitz des Befestigungsteils selbst nach häufiger Montage und Demontage gewährleistet.

Das Anschlußteil wird zweckmäßigerweise durch Kleben, Schweißen, Pressen oder Montagegießen verbunden. Hierzu ist ein kegeliger Ansatz am Grundkörper vorteilhaft. Er erleichtert zum einen die Zentrierung der beiden Teile zueinander und zum anderen ermöglicht er eine große Fügefläche, über die die Kräfte und Drehmomente gut übertragen werden.

Für das Montagegießen wird das Anschlußteil auf den Grundkörper gesetzt und der Fügespalt mit flüssigem Zink, Magnesium, Blei, Zinn oder einer geeigneten Legierung ausgespritzt. Ein Zwischenstück aus Zink oder einem geeigneten Werkstoff kann zwischen dem Grundkörper und dem Anschlußstückangeordnet werden und dieses durchdringen. Das Zwischenstück sitzt zweckmäßigerweise ebenfalls auf einen in Längsrichtung geriffelten, konischen Ansatz des Grundkörpers und besitzt seinerseits einen geriffelten Konus zur Aufnahme des Anschlußteils.

Die aus Grundkörper, gegebenenfalls einem Zwischenstück und dem Anschlußteil bestehende Antriebswelle kann ohne wesentliche Mehrkosten einen oder mehrere Längskanäle aufweisen, durch die Waschwasser zu Spritzdüsen geleitet werden kann, die in oder an einem nicht näher dargestellten Wischarm angeordnet sein können. Ferner können die Längskanäle Heizleitungen zum Aufwärmen des Waschwassers aufnehmen.

Um das Anschlußstück mit einer zentralen Bohrung einfach zu gestalten, ist es zweckmäßig, das Zwischenstück aus Zink mit den Längskanälen zu versehen und durch das Anschlußteil hindurch zu führen. Dabei kann das Zwischenstück einen nach außen weisenden Kopf aufweisen, an den weiterführende Kanäle leicht anschließbar sind.

Eine ähnliche Befestigungstechnik wie für das Anschlußstück kann auch für die Kurbel verwendet werden. Hierbei ist es zweckmäßig, daß der Grundkörper am kurbelseitigen Ende einen Bereich mit einer Riffelung in Längsrichtung aufweist, auf der die Kurbel aus einem härteren Werkstoff mit dem Grundkörper vergessen ist.

Um Kontaktkorrosion zwischen den einzelnen Bestandteilen der Antriebswelle zu vermeiden, ist es vorteilhaft, daß der Grundkörper und das Anschlußteil bzw. die Kurbel nach dem zusammenfügen chemisch vernickelt sind.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

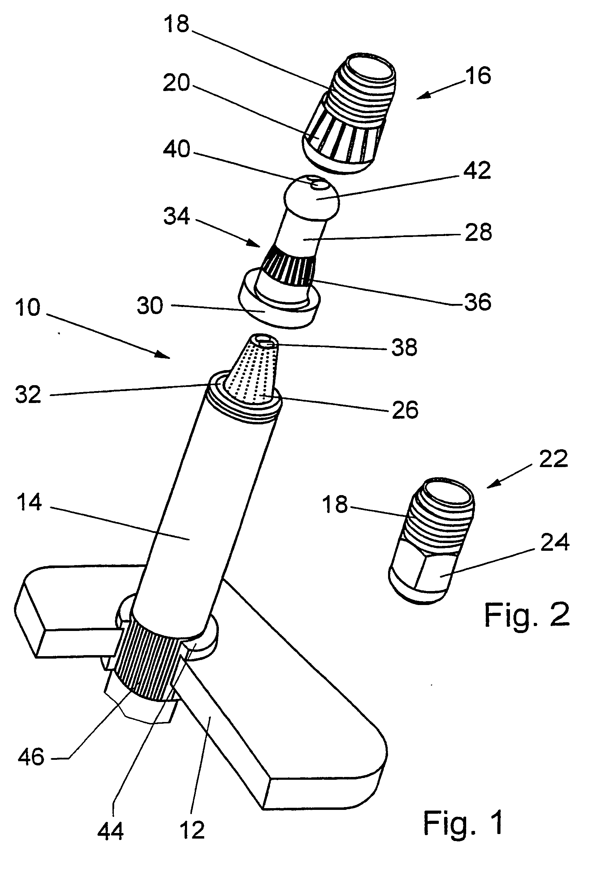

- Fig. 1: eine erfindungsgemäße Antriebswelle in einer Explosionsdarstellung und
- Fig. 2: eine Variante eines Anschlußteils.

### Beschreibung der Ausführungsbeispiele

Eine Antriebswelle 10 ist aus mehreren, fest miteinander verbundenen Teilen zusammengesetzt, und zwar aus einem Grundkörper 14, einer Kurbel 12, einem Anschlußteil 16, 22 und gegebenenfalls aus einem Zwischenstück 28.

Der Grundkörper 14 ist aus einem stranggepreßten Leichtmetallprofil hergestellt und besitzt zwei Längskanäle 38 sowie einen konischen Ansatz 26, der eine Längsriffelung besitzen kann. Auf den konischen Ansatz 26 kann unmittelbar oder mittelbar über das Zwischenstück 28 das Anschlußteil für ein Befestigungsteil eines Wischerarms aufgesetzt werden und durch Kleben, Schweißen, Pressen oder Montagegießen mit dem Grundkörper verbunden werden. Das Zwischenstück 28 liegt dabei mit seinem Bund 30 an einem Absatz 32 des Grundkörpers 14 an.

Das Zwischenstück 28 weist zum Anschlußteil 16 hin einen Konus 34 mit einer Riffelung 36 auf, auf den das Anschlußteil 16 aufgesetzt bzw. gepreßt wird. Dabei ragt das Zwischenstück 28 durch das Anschlußteil 16 mit seinem Kopf 42 hindurch. Das Zwischenstück 28 besitzt ebenfalls Längskanäle 40, die die Längskanäle 38 des Grundkörpers 14 verlängern und an die weiterführende Kanäle angeschlossen werden können.

Das Anschlußteil 16 ist aus einem härten Werkstoff hergestellt, so daß es ohne weiteres die höheren Belastungen im Bereich eines Schraubengewindes 18 oder eines Kegelsitzes 20 standhalten kann. Dadurch ist ein sicherer Sitz des Wischarms und eine leichte Montage und Demontage des Wischarms gewährleistet. Das Anschlußteil 22 besitzt anstelle des Kegelsitzes 20 des Anschlußteils 16 ein polygonales Mitnahmeprofil 24, das zum Schraubengewinde 18 hin leicht konisch verlaufen kann.

Die Kurbel 12 ist ähnlich wie das Anschlußteil 16 bzw. 22 über eine Verbindungsschicht 44 aus Zink oder einem anderen geeigneten Werkstoff durch Montagegießen mit dem Grundkörper 14 verbunden dieser besitzt an der Verbindungsstelle eine Riffelung 46, durch die der Stoffschluß durch einen Formschluß unterstützt wird.

### Bezugszeichen

- 10: Antriebswelle
- 12: Kurbel
- 14: Grundkörper
- 16: Anschlußteil
- 18: Schraubengewinde
- 20: Kegelsitz
- 22: Anschlußteil
- 24: Mitnahmeprofil
- 26: Ansatz
- 28: Zwischenstück
- 30: Bund
- 32: Absatz
- 34: Konus
- 36: Riffelung
- 38: Längskanal
- 40: Längskanal
- 42: Kopf
- 44: Verbindungsschicht
- 46: Riffelung

## Patentansprüche

1. Antriebswelle (10) für einen Scheibenwischer, an der eine Kurbel (12) befestigt ist, **dadurch gekennzeichnet, daß** ein Grundkörper (14) der Antriebswelle (10) aus einem stranggepreßten Leichtmetallprofil hergestellt ist und an seinem freien Ende im Bereich eines Befestigungsteils ein Anschlußteil (16, 22) aus einem härteren Werkstoff trägt, das ein Schraubengewinde (18) besitzt.

2. Antriebswelle (10) nach Anspruch 1, **dadurch gekennzeichnet, daß** das Anschlußteil (16, 22) aus Stahl, Bronze oder Kupfer besteht.

3. Antriebswelle (10) nach Anspruch 1 oder 2, **dadurch gekennzeichnet, daß** das Anschlußteil (16) einen Kegelsitz (20) mit einer Riffelung für das Befestigungsteil aufweist.

4. Antriebswelle (10) nach einem der Ansprüche 1 oder 2, **dadurch gekennzeichnet, daß** das Anschlußteil (22) ein polygonales Mitnahmeprofil (24) hat.

5. Antriebswelle (10) nach einem der vorhergehenden Ansprüche, **dadurch gekennzeichnet, daß** der Grundkörper (14) einen kegeligen Ansatz (26) aufweist, auf den das Anschlußteil (16) aufgesetzt und mit dem es durch Kleben, Schweißen, Aufpressen oder Montagegießen verbunden ist.

6. Antriebswelle (10) nach Anspruch 5, **dadurch gekennzeichnet, daß** das Anschlußteil (16, 22) über ein Zwischenstück (28) mit dem Grundkörper (14) vergossen ist.

7. Antriebswelle (10) nach Anspruch 5 oder 6, **dadurch gekennzeichnet, daß** das Anschlußteil (16, 22) auf einem in Längsrichtung geriffelten, konischen Ansatz (26) des Grundkörpers bzw. auf einem geriffelten Konus (34) des Zwischenstücks (28) sitzt.

8. Antriebswelle (10) nach einem der vorhergehenden Ansprüche, **dadurch gekennzeichnet, daß** sie mindestens einen Längskanal (38, 40) aufweist.

9. Antriebswelle (10) nach einem der Ansprüche 6 bis 8, **dadurch gekennzeichnet, daß** das Anschlußstück (16, 22) als Gewindehülse ausgebildet ist, durch die das Zwischenstück (28) mit mindestens einem Längskanal (40) hindurch geführt ist.

10. Antriebswelle (10) nach einem der vorhergehenden Ansprüche, **dadurch gekennzeichnet, daß** der Grundkörper (14) und das Anschlußteil (16, 22) bzw. die Kurbel (12) nach dem Zusammenfügen chemisch vernickelt sind.

11. Antriebswelle (10) nach einem der vorhergehenden Ansprüche, **dadurch gekennzeichnet, daß** der Grundkörper (14) am kurbelseitigen Ende einen Bereich mit einer Riffelung (46) in Längsrichtung aufweist, auf der die Kurbel (12) aus einem härteren Werkstoff mit dem Grundkörper (14) mit einer Verbindungschicht (42) aus Zink oder dgl. vergossen ist.

## Claims

1. Primary shaft (10) for a windscreen wiper, to which a crank (12) is fastened, **characterized in that** a basic body (14) of the primary shaft (10) is produced from an extruded light metal profile and, at its free end in the region of a fastening part, bears a connecting part (16, 22) of a harder material that has a screw thread (18).

2. Primary shaft (10) according to Claim 1, **characterized in that** the connecting part (16, 22) consists of steel, bronze or copper.

3. Primary shaft (10) according to Claim 1 or 2, **characterized in that** the connecting part (16) has a conical seat (20) with a fluting for the fastening part.

4. Primary shaft (10) according to either of Claims 1 and 2, **characterized in that** the connecting part (22) is a polygonal carry-along profile (24).

5. Primary shaft (10) according to one of the preceding claims, **characterized in that** the basic body (14) has a conical projection (26) onto which the connecting part (16) is placed and to which it is connected by bonding, welding, pressing on or assembly casting.

6. Primary shaft (10) according to Claim 5, **characterized in that** the connecting part (16, 22) is cast with the basic body (14) via an intermediate part (28).

7. Primary shaft (10) according to Claim 5 or 6, **characterized in that** the connecting part (16, 22) sits on a conical projection (26) of the basic body, which projection is fluted in the longitudinal direction, or on a fluted cone (34) of the intermediate part (28).

8. Primary shaft (10) according to one of the preceding claims, **characterized in that** it has at least one longitudinal channel (38, 40).

9. Primary shaft (10) according to one of Claims 6 to 8, **characterized in that** the connecting part (16, 22) is designed as a threaded sleeve through which the intermediate part (28) having at least one longitudinal channel (40) is guided.

10. Primary shaft (10) according to one of the preceding claims, **characterized in that** the basic body (14) and the connecting part (16, 22) or the crank (12) are chemically nickel-plated after being joined together.

11. Primary shaft (10) according to one of the preceding claims, **characterized in that** the basic body (14) has, at the crank end, a region with a fluting (46) in the longitudinal direction on which the crank (12) of a harder material is cast together with the basic body (14) with a connecting layer (42) of zinc or the like.

## Revendications

1. Axe d'entraînement (10) d'un essuie-glace fixé à une manivelle (12)
**caractérisé en ce que**
le corps de base (14) de l'axe d'entraînement (10) est fabriqué à partir d'un profil en métal léger extrudé dont l'extrémité libre possède au niveau d'une pièce de fixation, une partie d'accouplement (16, 22) en une matière plus dure munie d'un filetage (18).

2. Axe d'entraînement (10) selon la revendication 1,
**caractérisé en ce que**
la partie d'accouplement (16, 22) est en acier, en bronze ou en cuivre.

3. Axe d'entraînement (10) selon l'une des revendications 1 ou 2,
**caractérisé en ce que**
la pièce d'accouplement (16) comporte un siège conique (20) moleté pour la pièce de fixation.

4. Axe d'entraînement (10) selon l'une des revendications 1 ou 2,
**caractérisé en ce que**
la pièce d'accouplement (22) a un profil d'entraînement (24) polygonal.

5. Axe d'entraînement (10) selon l'une quelconque des revendications précédentes,
**caractérisé en ce que**
le corps de base (14) comporte un prolongement conique (26) sur lequel est engagée la pièce d'accouplement (16) et auquel elle est reliée par collage, soudage, montage serré ou montage par coulée.

6. Axe d'entraînement (10) selon la revendication 5,
**caractérisé en ce que**
la pièce d'accouplement (16, 22) est coulée avec le corps de base (14) par une pièce intermédiaire (28).

7. Axe d'entraînement (10) selon l'une des revendications 5 ou 6,
**caractérisé en ce que**
la pièce d'accouplement (16, 22) est montée sur un prolongement conique (26) moleté dans la direction longitudinale du corps de base ou sur un cône moleté (34) de la pièce intermédiaire (28).

8. Axe d'entraînement (10) selon l'une quelconque des revendications précédentes,
**caractérisé en ce qu'**
il comporte au moins un canal longitudinal (38, 40).

9. Axe d'entraînement (10) selon l'une des revendications 6 à 8,
**caractérisé en ce que**
la pièce d'accouplement (16, 22) est réalisée sous la forme d'un manchon fileté traversé par la pièce intermédiaire (28) avec au moins un canal longitudinal (40).

10. Axe d'entraînement (10) selon l'une quelconque des revendications précédentes,
**caractérisé en ce que**
le corps de base (14) et la pièce d'accouplement (16, 22) ou la manivelle (12) reçoivent un nickelage par voie chimique après assemblage.

11. Axe d'entraînement (10) selon l'une quelconque des revendications précédentes,
**caractérisé en ce que**
le corps de base (14) comporte, à son extrémité côté manivelle une zone moletée (46) dans la direction longitudinale recevant la manivelle (12), en une matière plus dure que le corps de base (14) et une couche de liaison (42) en zinc ou matière analogue coulée.
